# EUROPÄISCHE PATENTSCHRIFT

(11) **EP 2 813 139 B1**
(45) Veröffentlichungstag und Bekanntmachung des Hinweises auf die Patenterteilung: **04.01.2017**
(21) Anmeldenummer: 13171562.5
(22) Anmeldetag: 11.06.2013
(51) Int. Cl.: A01G 17/14

(54) **Vorrichtung für den Wein- oder Obstbau**
Device for cultivating vines or fruits
Dispositif destiné à la viticulture et à l'arboriculture fruitière

(43) Veröffentlichungstag der Anmeldung: 17.12.2014
(73) Patentinhaber: voestalpine Krems GmbH, 3500 Krems an der Donau (AT)
(72) Erfinder: Seyr, Alfred, 3125 Statzendorf (AT); Hauser, Christian, 1140 Wien (AT); Pflügl, Hans, 3495 Rohrendorf (AT); Stumvoll, Matthias, 3610 Weissenkirchen (AT)
(74) Vertreter: Jell, Friedrich

(56) Entgegenhaltungen:
- EP-B1- 0 072 420
- CH-A2- 699 287
- DE-A1- 3 617 545
- FR-A1- 2 840 153
- FR-A1- 2 858 171
- FR-A1- 2 896 951

## Beschreibung

Die Erfindung betrifft eine Vorrichtung für den Wein- oder Obstbau mit mindestens einem metallischen Spalierpfahl und mit wenigstens einem am Spalierpfahl befestigten, insbesondere metallischen, Profilstück, das mindestens ein Halteelement für einen Spanndraht aufweist.

Um an einem Spalierpfahl Halteelemente für einen Spanndraht in frei wählbarer Spalierpfahlhöhe vorsehen zu können, ist es aus dem Stand der Technik bekannt (CH699287A2), die Halteelemente an einem Metallprofil vorzusehen, das am Spalierpfahl über eine Schraubverbindung befestigt wird. Das Metallprofil bildet zudem mit seinen beiden endseitigen Profilschenkeln Krallen aus, um eine Klemmwirkung auf den Spalierpfahl auszuüben und damit die mechanische Verbindung zu erhöhen. Solch eine belastbare Verbindung zwischen Spalierpfahl und Spanndraht ist insbesondere von Vorteil, wenn die Vorrichtung unter mechanischer Belastung aufgrund eines Ernteeinsatzes - etwa einer Erntemaschine - steht. Nachteilig führen jedoch die Krallen des Metallprofils zu einer Beschädigung der Oberflächen des Spalierpfahls, womit auch dessen Korrosionsfestigkeit und damit die Standfestigkeit der Vorrichtung vermindert werden.

Zudem ist aus dem Stand der Technik ein gebogenes Drahtelement bekannt (EP72420B1), das am Spalierpfahl verschiebbar gelagert ist und mit einem seiner Drahtabschnitte in eine Profileinprägung des Spalierpfahls einrastet. Außerdem bildet das Drahtelement ein laschenförmiges Halteelement zum Einfädeln des Spanndrahts aus. Zwar erlauben diese Drahtelemente selbst bei eingefädeltem Spanndraht eine vergleichsweise einfach handhabbare Höhenverstellung am Spalierpfahl, jedoch kann damit aufgrund ihrer federelastischen Eigenschaft keine belastbare Verbindung sichergestellt werden - und zwar insbesondere wenn Querkräfte auf den Spanndraht einwirken und damit die Drahtelemente kippbelasten. Mit solchen Querkräften ist jedoch in hohem Maße unter anderem beim Einsatz von Erntemaschinen zu rechnen. Losgelöste Drahtelemente stellen allerdings ein Problem für die Funktion von Erntemaschinen dar, weshalb derartige Vorrichtungen für einen automatisierten Wein- oder Obstbau nur bedingt geeignete sind.

Eine Vorrichtung gemäß dem Oberbegriff des Anspruchs 1 ist aus FR2840153A1 bekannt.

Es ist daher die Aufgabe der Erfindung, eine Vorrichtung für den Wein- oder Obstbau der eingangs geschilderten Art derart konstruktiv zu verändern, dass eine einfach handhabbare Höhenverstellung des Spanndrahts am Spalierpfahl möglich ist, ohne dass die Standfestigkeit der Vorrichtung darunter leidet.

Die Erfindung löst die gestellte Aufgabe dadurch, dass zwischen Spalierpfahl und Profilstück sowohl eine geschlossene Geradführung, von welcher der Spalierpfahl längsseitig ein schienenförmiges Führungselement ausbildet, auf dem das Profilstück gleitend geführt ist, als auch eine öffenbare Schnappverbindung vorgesehen ist, von der das Profilstück ein Federelement aufweist, das am Spalierpfahl einrastet.

Ist zwischen Spalierpfahl und Profilstück sowohl eine geschlossene Geradführung vorgesehen, von welcher der Spalierpfahl längsseitig ein schienenförmiges Führungselement ausbildet, auf dem das Profilstück gleitend geführt ist, kann nicht nur der von gebogenen Drahtelementen bekannte Vorteil einer verschiebbaren Lagerung am Spalierpfahl übernommen werden, es kann damit insbesondere auch eine hohe Standfestigkeit der Vorrichtung sichergestellt werden. So kann gegenüber dem Stand der Technik auf Krallen oder dergleichen am Profilstück verzichtet werden, um damit die mechanische Verbindung zwischen Spalierpfahl und Profilstück zu verbessern. Dadurch sind Beschädigungen am Spalierpfahl vermeidbar. Zudem kann durch die im Vergleich zu Drahtelementen erhöhte Biegesteifigkeit des Profilstücks unter Berücksichtigung seiner geschlossenen Geradführung eine mechanisch besonders belastbare Verbindung geschaffen werden, die ein Abheben des Profilstücks vom Spalierpfahl selbst bei vergleichsweise hohen Kippbelastungen sicher unterbinden kann. Mit losgelösten Profilstücken und damit einhergehenden Komplikationen muss daher auch bei Querbelastungen durch Erntemaschinen nicht gerechnet werden, sodass sich die erfindungsgemäße Vorrichtung besonders für einen automatisierten Wein- oder Obstbau eignen kann. Ist zudem zwischen Spalierpfahl und Profilstück auch eine öffenbare Schnappverbindung vorgesehen, von der das Profilstück ein Federelement aufweist, das am Spalierpfahl einrastet, kann die Höhenverstellung des Spanndrahts erheblich erleichtert werden. Zudem sind zur Lagefixierung des Profilstücks keine weiteren Verbindungsmittel notwendig, womit nicht nur Aufbau und Wartung vereinfacht werden können, sondern in weiterer Folge auch die Gefahr von losgelösten Teilen der Vorrichtung reduzierbar sind und die Eignung der Vorrichtung für einen automatisierten Wein- oder Obstbau weiter erhöht wird.

Weist das Profilstück einen vorspringenden Schnapphaken als Federelement auf, der in eine Profilierung im oder Öffnung am Spalierpfahl einrastet, kann damit die Handhabung der Vorrichtung zusätzlich erleichtert werden. Insbesondere aber kann durch die vorspringende Ausführung des Schnapphakens auf Handwerkzeuge zur Betätigung der Schnappverbindung verzichtet werden. So ist in weiterer Folge auch eine hohe Standfestigkeit des Spalierpfahls - bzw. insbesondere auch seiner Oberfläche - sichergestellt.

Konstruktiv einfach kann die Ausbildung eines Schnapphakens durch ein umgebogenes Blechteil realisiert werden.

Indem eine Lasche des Profilstücks verwendet wird, den Schnapphaken auszubilden, kann der Herstellungsaufwand des Profilstücks reduziert und zudem ein mechanisch belastbarer Konstruktionsverbund geschaffen werden.

Ein ungewolltes Abheben des Profilstücks vom Spalierpfahl kann erheblich erschwert werden, wenn wenigstens zwei Profilschenkel des Profilstücks Umgriffführungsflächen der Geradführung ausbilden. Außerdem kann solch eine Umgriffführung die Gefahr eines Verkantens des Profilstücks bei dessen Verschieben am Spalierpfahl verringern. So können auch mechanische Belastungen der Spalierpfahloberflächen vermieden werden, womit wiederum auch dessen Standfestigkeit erhöht wird. Vorzugsweise können die endseitigen Profilschenkel des Profilstücks diese Umgriffführungsflächen ausbilden, um den Materialbedarf des Profilstücks gering zu halten.

Das Profilstück kann weiter einen vom Spalierpfahl vorspringenden Profilabschnitt mit wenigstens einer Profilöffnung aufweisen, die wenigstens einen Teil des Halteelements für den Spanndraht ausbildet, um damit konstruktiv vergleichsweise einfach am Profilstück Mittel zur Führung bzw. zum Halten des Spanndrahts vorsehen zu können.

Einfache Fertigungsverhältnisse können sich ergeben, wenn der Profilabschnitt im Querschnitt U-förmig verläuft. Damit kann beispielsweise die Herstellung mittels kostengünstigem Umformverfahren erreicht werden.

Weist die Profilöffnung wenigstens zwei zueinander geneigte Schlitze auf, kann zudem der aufgenommene Spanndraht - vor einem unerwünschten Herausziehen verbessert geschützt - am Halteelement vorgesehen werden. Insbesondere normal aufeinander stehende Schlitzabschnitte haben sich bewährt, um selbst bei Schwingungen am Spanndraht höchste Abzugssicherheit am Halteelement gewährleisten zu können.

Ein reduzierter Konstruktionsaufwand kann sich ergeben, wenn die Profilöffnung T-förmig verläuft.

Der Spanndraht kann weiter gegen ein unerwünschtes Aushängen vom Profilstück geschützt werden, wenn der am Rücken des vorspringenden Profilabschnitts ausmündende Schlitz in Schlitzabschnitte des anderen Schlitzes auf unterschiedlichen Schlitzhöhen einmündet, welche als Schlitzabschnitte auf je einem der beiden Schenkel des vorspringenden Profilabschnitts vorgesehenen sind.

Vorzugsweise kann durch eine am Rücken des vorspringenden Profilabschnitts schräg zur Geradführung ausmündende Profilöffnung erreicht werden, dass beim Einhängen des Spanndrahts dieser schräg gestellt und damit auf diesen eine Zugbelastung ausgeübt werden muss. Die Gefahr eines ungewollten Aushängens des Spanndrahts kann dadurch weiter reduziert werden, was die Standfestigkeit der Vorrichtung erhöht. Zudem kann diese Form unterschiedlich tiefe Halteelemente an einem Halteelement ermöglichen.

Der Abstand zwischen Spanndraht und Spalierpfahl ist vergleichsweise einfach über das Profilstück einstellbar, wenn der vorspringende Profilabschnitt wenigstens zwei Profilöffnungen mit unterschiedlichen Tiefen aufweist. Dem geforderten Normalabstand zu Spalierpfahl entsprechend kann zwischen den unterschiedlich tiefen Schlitzen gewählt werden. Zudem erfordert es beim Einstellen dieses Abstands nicht unbedingt einer Verschiebung des Profilstücks am Spalierpfahl, was der Handhabungsfreundlichkeit der Vorrichtung förderlich sein kann.

Kostenvorteile nutzend kann das Profilstück aus einem umgeformten Metallblech bestehen. Dazu kann insbesondere ein Profilwalzen als Umformverfahren beitragen.

Beidseitig zum Spalierpfahl verlaufende Spanndrähte können an der Vorrichtung höhenverstellbar befestigt werden, wenn an gegenüberliegenden Seiten des Spalierpfahls je mindestens ein Profilstück gleitend geführt ist.

In den Figuren ist der Erfindungsgegenstand beispielsweise anhand einer Ausführungsvariante näher dargestellt. Es zeigen
- Fig. 1: eine abgerissene und teilweise aufgerissene Frontansicht auf die Vorrichtung für den Wein- oder Obstbau,
- Fig. 2: eine teilweise aufgerissene Draufsicht auf die Vorrichtung nach Fig. 1,
- Fig. 3: eine abgerissene und teilweise aufgerissene Seitenansicht auf die Vorrichtung nach Fig. 1,
- Fig. 4: eine vergrößerte Detailansicht zur Fig. 1 und
- Fig. 5: eine vergrößerte Detailansicht zur Fig. 3.

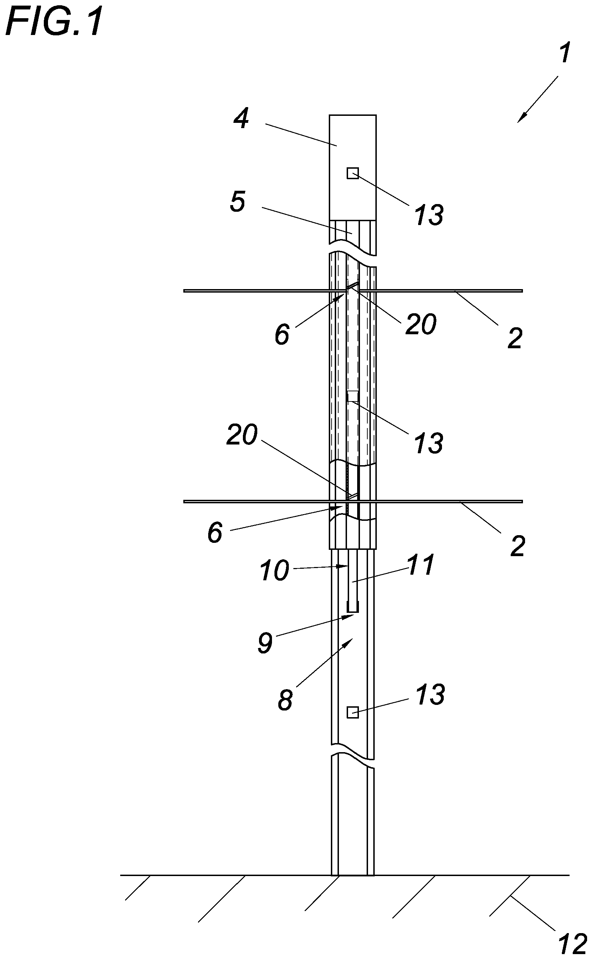

Die nach Fig. 1 in abgerissener und teilweise aufgerissener Seitenansicht dargestellte Vorrichtung 1 ist für den Wein- oder Obstbau bestimmt. Beispielsweise werden Weinranken in die Spanndrähte 2, 3 der Vorrichtung 1 eingestrickt, um einer nicht näher dargestellten Weinpflanze Wachstumshalt zu geben. Diese damit mechanisch belasteten Spanndrähte 2 werden von mehreren nacheinander angeordneten Spalierpfählen 4 gestützt, von denen nach Fig. 1 der Übersichtlichkeit halber lediglich nur ein im Erdreich 12 verankerter Spalierpfahl 4 dargestellt ist.

Im mechanischen Kraftfluss zwischen Spalierpfahl 4 und Spanndraht 2 ist ein Profilstück 5 vorgesehen, das für jeden Spanndraht 2 je ein Halteelement 6 aufweist. Das Profilstück 5 wird aus einem umgeformten metallischen Blech, insbesondere Stahlblech, gebildet und weist bevorzugt eine nicht näher dargestellte Korrosionsschutzschicht auf. Das Profilstück 5 ist auf unterschiedlichen vertikalen Höhen des Spalierpfahls 4 positionierbar, und zwar erfindungsgemäß über eine geschlossene Geradführung 7, wodurch das Profilstück 5 vor einem ungewollten Abheben vom Spalierpfahl 3 sicher geschützt ist. Daher können selbst Erntemaschinen die mechanische Verbindung zwischen Spanndrähten 2, 3, Profilstück 5 und Spalierpfahl 4 nicht gefährden, wodurch sich die erfindungsgemäße Vorrichtung 1 für den automatisierten Wein- oder Obstanbau besonders eignet. Von dieser Geradführung 7 bildet der Spalierpfahl 4 das schienenförmige Führungselement 8 aus, das sich entlang des Spalierpfahls 4 erstreckt. Auf dem schienenförmigen Führungselement 8 ist das Profilstück 5 gleitend geführt, wodurch sich eine Linearführung ausbildet. Die Lagefixierung des Profilstücks 5, 25 auf dem Spalierpfahl 4 übernimmt eine Schnappverbindung 9. Hierzu ist dem Profilstück 5 ein Federelement 10 zugeordnet, das mit dem Spalierpfahl 4 verrastet. Die Kombination aus Geradführung 7 bzw. Linearführung und Schnappverbindung 9 stellt zudem sicher, dass beim Lageverstellen des Profilstücks 5 die Oberfläche des Spalierpfahls 4 unbeschädigt bleibt. Die Vorteile eines korrosionsbeschichteten Spalierpfahls 4 bleiben somit erhalten.

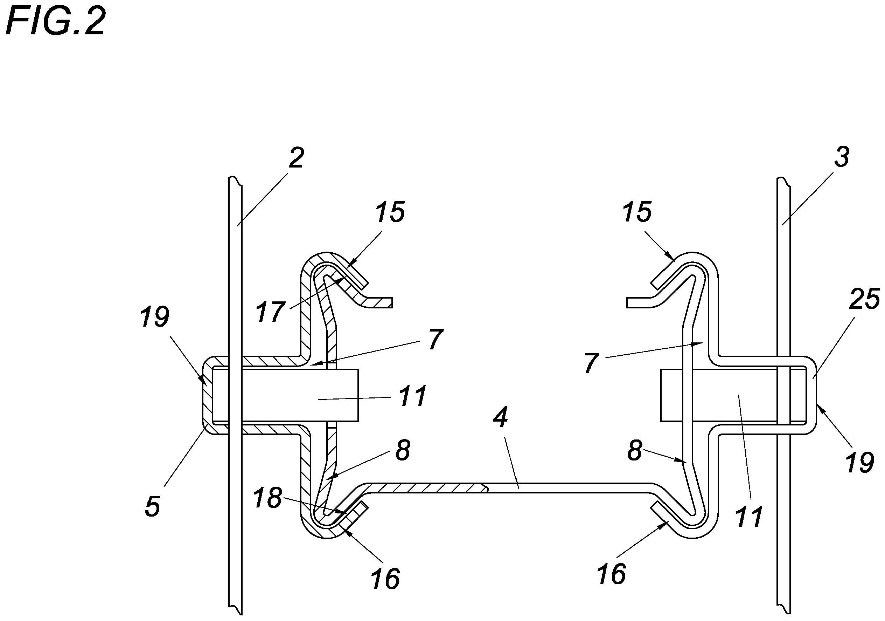

Das Federelement 10 des Profilstücks 5 ist als ein, dem Profilstück 5 vorspringender Schnapphaken 11 ausgebildet. Eine derartige vorspringende Ausführung erleichtert das Öffnen der Schnappverbindung 9, was die Wahrscheinlichkeit von Beschädigungen, beispielsweise verursacht durch Handwerkzeuge, am Spalierpfahl 4 weiter reduziert. Wie nach Fig. 1 und 2 weiter zu erkennen ist, rastet der Schnapphaken 11 in eine der Öffnungen 13 des Spalierpfahls 4 ein. Vorstellbar ist auch anstatt der Öffnungen 13 Prägungen mit Hilfe eines Umformens in den Spalierpfahl 4 einzubringen, was jedoch nicht näher dargestellt wurde.

Der Schnapphaken 11 wird durch ein umgebogenes Blechteil 14 ausgebildet, was die Herstellung des Profilstücks 5 erleichtert. Dies umso mehr, indem eine Lasche des Profilstücks 5 den Schnapphaken 11 ausbildet. Eine kostengünstig herzustellende Vorrichtung 1 ist so geschaffen.

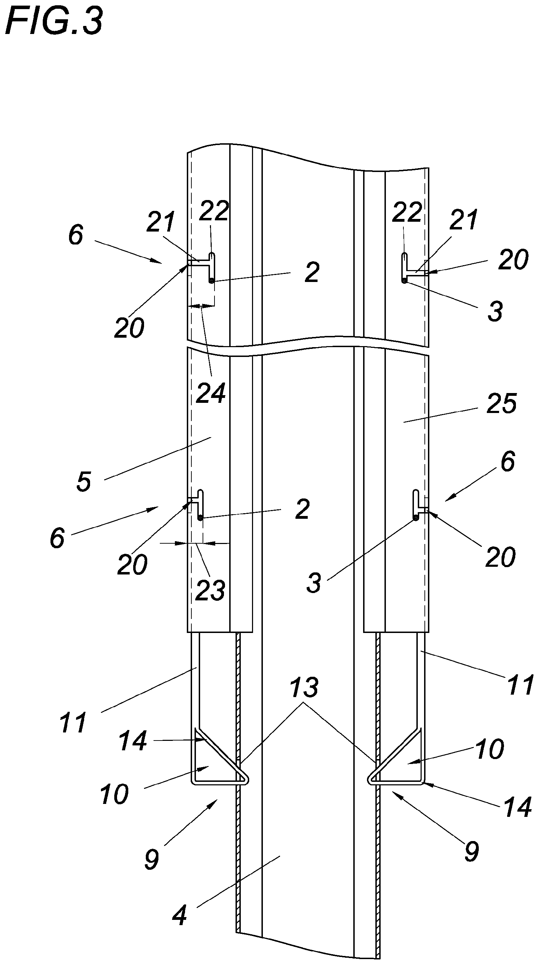

Für ein breites Anliegen des Profilstücks 5, 25 am Spalierpfahl 4 wird gesorgt, indem zwei Profilschenkel 15, 16 des Profilstücks 5 Umgriffführungsflächen 17, 18 für die Geradführung 7 ausbilden - wie dies beispielsweise in Fig. 3 erkannt werden kann. Materialsparend werden hierzu die Enden des Profilstücks 5 zur Ausbildung der Profilschenkel 17, 18 herangezogen, wodurch sich das Profilstück 5 im Querschnitt im Wesentlichen U-förmig ausbildet.

Das für eine Vielzahl unterschiedlicher Spanndrähte 2 am Profilstück 5 vorgesehene Halteelement 6 wird vom Profilstück 5 selbst ausgebildet, was den konstruktiven Aufwand der Vorrichtung 1 deutlich reduziert. Hierzu wird am Profilstück 5 ein vom Spalierpfahl 4 vorspringender, U-förmiger Profilabschnitt 19 vorgesehen - hergestellt beispielsweise durch ein Umformverfahren. In diesen Profilabschnitt 19 werden Öffnungen 20 eingebracht, die dem Halten des Spanndrahts 2 dienen.

Die Öffnungen 20 stellen sich aus zwei normal zueinander stehenden Schlitzabschnitten 21, 22 zusammen, die einen T-förmigen Verlauf der Öffnung ausbilden. Damit ist selbst im Fall eines schwingenden Spanndrahts 2 die Gefahr für dessen Aushängen reduziert.

Wie auch in Fig. 3 erkannt werden kann, weisen die Öffnungen 20 unterschiedliche Tiefen 23, 24 am wegspringenden Profilabschnitt 19 auf, wodurch der Normalabstand der Spanndrähte 2 zum Spalierpfahl 4 veränderbar ist.

Zudem sind an den Breitseiten des Spalierpfahls 4 zwei Profilstücke 5, 25 verschiebbar gelagert, um dadurch beidseitig Spanndrähte 2, 3 am Spalierpfahl 4 zu befestigen. Die konstruktive Ausführung beider Profilstücke 5, 25 bzw. deren Lagerungen am Spalierpfahl 4 ist ident.

Es ist aber auch vorstellbar, voneinander unterschiedliche Profilstücke 5, 25 vorzusehen, um damit beispielsweise verschiedensten Abständen zwischen Spanndraht 2, 3 und Spalierpfahl 4 genügen zu können.

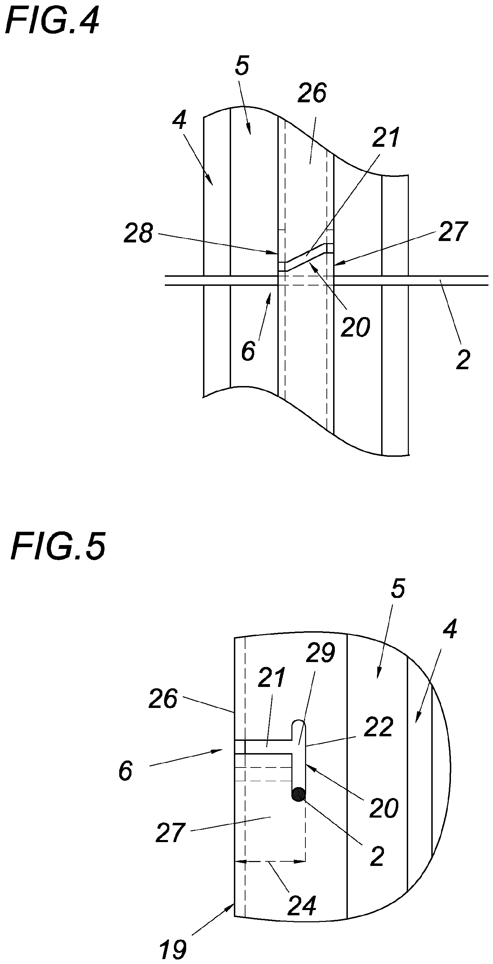

Gemäß den Figuren 4 und 5 ist die konstruktive Ausführung der Profilöffnung 20 vergrößert dargestellt. Von dieser Profilöffnung 20 mündet am Rücken 26 des vorspringenden Profilabschnitts 19 der erste Schlitz 21 aus, über den der Spanndraht 2 in das Halteelement 6 des Profilstücks geführt werden kann. Dieser erste Schlitz 21 ist mit dem zweiten Schlitz 22 verbunden, der Schlitzabschnitte 29 in beiden Schenkeln 27, 28 des vorspringenden Profilabschnitts 19 aufweist. Wie in Fig. 5 insbesondere zu erkennen ist, mündet der Schlitz 21 in den Schlitzabschnitt 29 am Schenkel 27 höher ein, als dies beim Schlitzabschnitt 29 am Schenkel 28 der Fall ist. Damit ist der Spanndraht 2 gegenüber einem unerwünschten Aushängen geschützt von dem Halteelement 6 aufgenommen.

Zudem ist nach Fig. 4 zu erkennen, dass die Profilöffnung 20 am Rücken 26 des vorspringenden Profilabschnitts 19 schräg zur Geradführung 7 ausmündet. Um den Spanndraht 2 in das Halteelement 6 einzusetzen zu können, muss daher der Spanndraht 2 gekippt und somit gespannt werden. Damit ist die Sicherheit des Halteelements 6 gegenüber einem unerwünschten Aushängen des Spanndrahts 2 weiter erhöht.

## Patentansprüche

1. Vorrichtung für den Wein- oder Obstbau mit mindestens einem metallischen Spalierpfahl (4) und mit wenigstens einem am Spalierpfahl (4) befestigten, insbesondere metallischen, Profilstück (5, 25), das mindestens ein Halteelement (6) für einen Spanndraht (2, 3) aufweist, **dadurch gekennzeichnet, dass** zwischen Spalierpfahl (4) und Profilstück (5, 25) sowohl eine geschlossene Geradführung (7), von welcher der Spalierpfahl (4) längsseitig ein schienenförmiges Führungselement (8) ausbildet, auf dem das Profilstück (5, 25) gleitend geführt ist, als auch eine öffenbare Schnappverbindung (9) vorgesehen ist, von der das Profilstück (5, 25) ein Federelement (10) aufweist, das am Spalierpfahl (4) einrastet.

2. Vorrichtung nach Anspruch 1, **dadurch gekennzeichnet, dass** das Profilstück (5, 25) einen vorspringenden Schnapphaken (11) als Federelement (10) aufweist, der in eine Profilierung im oder Öffnung (13) am Spalierpfahl (4) einrastet.

3. Vorrichtung nach Anspruch 2, **dadurch gekennzeichnet, dass** ein umgebogenes Blechteil den Schnapphaken (11) ausbildet.

4. Vorrichtung nach Anspruch 2 oder 3, **dadurch gekennzeichnet, dass** eine Lasche des Profilstücks (5, 25) den Schnapphaken (11) ausbildet.

5. Vorrichtung nach einem der Ansprüche 1 bis 4, **dadurch gekennzeichnet, dass** wenigstens zwei, insbesondere endseitige, Profilschenkel (15, 16) des Profilstücks (5, 25) Umgriffführungsflächen (17, 18) der Geradführung (7) ausbilden.

6. Vorrichtung nach einem der Ansprüche 1 bis 5, **dadurch gekennzeichnet, dass** das Profilstück (5, 25) einen vom Spalierpfahl (4) vorspringenden Profilabschnitt (19) mit wenigstens einer Profilöffnung (20) aufweist, die wenigstens einen Teil des Halteelements (6) für den Spanndraht (2, 3) ausbildet.

7. Vorrichtung nach Anspruch 6, **dadurch gekennzeichnet, dass** der Profilabschnitt (19) im Querschnitt U-förmig verläuft.

8. Vorrichtung nach Anspruch 6 oder 7, **dadurch gekennzeichnet, dass** die Profilöffnung (20) wenigstens zwei zueinander geneigte, insbesondere normal aufeinander stehende, Schlitze (21, 22) aufweist.

9. Vorrichtung nach Anspruch 8, **dadurch gekennzeichnet, dass** die Profilöffnung (20) T-förmig verläuft.

10. Vorrichtung nach Anspruch 8 oder 9, **dadurch gekennzeichnet, dass** der am Rücken (26) des vorspringenden Profilabschnitts (19) ausmündende Schlitz (21) in Schlitzabschnitte (29) des anderen Schlitzes (22) auf unterschiedlichen Schlitzhöhen einmündet, welche als Schlitzabschnitte (29) auf je einem der beiden Schenkel (27, 28) des vorspringenden Profilabschnitts (19) vorgesehenen sind.

11. Vorrichtung nach einem der Ansprüche 6 bis 10, **dadurch gekennzeichnet, dass** die Profilöffnung (20) am Rücken (26) des vorspringenden Profilabschnitts (19) schräg zur Geradführung (7) ausmündet.

12. Vorrichtung nach einem der Ansprüche 6 bis 11, **dadurch gekennzeichnet, dass** der vorspringende Profilabschnitt (19) wenigstens zwei Profilöffnungen (20) mit unterschiedlichen Tiefen (23, 24) aufweist.

13. Vorrichtung nach einem der Ansprüche 1 bis 12, **dadurch gekennzeichnet**, das das Profilstück (5, 25) aus einem umgeformten, insbesondere profilgewalztem, Metallblech besteht.

14. Vorrichtung nach einem der Ansprüche 1 bis 13, **dadurch gekennzeichnet, dass** an gegenüberliegenden Seiten des Spalierpfahls (4) je mindestens ein Profilstück (5, 25) gleitend geführt ist.

## Claims

1. A device for wine or fruit growing having at least one metallic trellis post (4) and having at least one, more particularly metallic, profile piece (5, 25), which is fastened to the trellis post (4) and has at least one holding element (6) for a tensioning wire (2, 3), **characterized in that** between the trellis post (4) and the profile piece (5, 25), a closed rectilinear guide (7) is provided, of which guide the trellis post (4) forms, on the longitudinal side, a rail-like guide element (8) on which the profile piece (5, 25) is guided in sliding fashion, and an openable snap connection (9) is provided, of which the profile piece (5, 25) has a spring element (10) that engages with the trellis post (4) in detent fashion.

2. The device according to claim 1, **characterized in that** the profile piece (5, 25) has a spring element (10) in the form of a protruding snap hook (11), which engages in detent fashion in a profiled region or opening (13) in the trellis post (4).

3. The device according to claim 2, **characterized in that** the snap hook (11) is embodied in the form of a bent sheet metal part.

4. The device according to claim 2 or 3, **characterized in that** the snap hook (11) is composed of a tab of the profile piece (5, 25).

5. The device according to one of claims 1 through 4, **characterized in that** at least two profile legs (15, 16), more particularly at the ends of the profile piece (5, 25), constitute wraparound guide surfaces (17, 18) of the rectilinear guide (7).

6. The device according to one of claims 1 through 5, **characterized in that** the profile piece (5, 25) has a profile section (19) protruding from the trellis post (4), with at least one profile opening (20), which constitutes at least a part of the holding element (6) for the tensioning wire (2, 3).

7. The device according to claim 6, **characterized in that** the profile section (19) has a U-shaped cross-section.

8. The device according to claim 6 or 7, **characterized in that** the profile opening (20) has at least two slots (21, 22) that are oriented at an angle, more particularly normally, to each other.

9. The device according to claim 8, **characterized in that** the profile opening (20) extends in a T shape.

10. The device according to claim 8 or 9, **characterized in that** the slot (21) that opens out onto the spine (26) of the protruding profile section (19) feeds into slot sections (29) of the other slot (22) at different slot heights, which are provided as slot sections (29) on each of the two legs (27, 28) of the protruding profile section (19).

11. The device according to one of claims 6 through 10, **characterized in that** the profile opening (20) provided on the spine (26) of the protruding profile section (19) opens out at an angle to the rectilinear guide (7).

12. The device according to one of claims 6 through 11, **characterized in that** the protruding profile section (19) has at least two profile openings (20) with different depths (23, 24).

13. The device according to one of claims 1 through 12, **characterized in that** the profile piece (5, 25) is composed of a shaped, more particularly profile-rolled, piece of sheet metal.

14. The device according to one of claims 1 through 13, **characterized in that** opposite sides of the trellis post (4) are each provided with at least one profile piece (5, 25) that is guided in sliding fashion.

## Revendications

1. Dispositif pour la viticulture ou l'arboriculture fruitière avec au moins un piquet d'espalier métallique (4) et avec au moins une pièce profilée (5, 25), en particulier métallique, fixée au piquet d'espalier (4), qui comporte au moins un élément de maintien (6) pour un fil de tension (2, 3), **caractérisé en ce qu'**il est prévu entre le piquet d'espalier (4) et la pièce profilée (5, 25) un guide rectiligne fermé (7), duquel le piquet d'espalier (4) forme longitudinalement un élément de guidage (8) en forme de rail sur lequel la pièce profilée (5, 25) est guidé de façon coulissante, ainsi qu'un assemblage clipsé (9) pouvant être ouvert, duquel la pièce profilée (5, 25) présente un élément de ressort (10) qui s'enclenche sur le piquet d'espalier (4).

2. Dispositif selon la revendication 1, **caractérisé en ce que** la pièce profilée (5, 25) présente un crochet d'enclenchement (11) en saillie servant d'élément de ressort (10), qui s'engage dans un profil ou une ouverture (13) du piquet d'espalier (4).

3. Dispositif selon la revendication 2, **caractérisé en ce qu'**une pièce en tôle recourbée forme le crochet d'enclenchement (11).

4. Dispositif selon la revendication 2 ou 3, **caractérisé en ce qu'**une patte de la pièce profilée (5, 25) forme le crochet d'enclenchement (11).

5. Dispositif selon l'une des revendications 1 à 4, **caractérisé en ce qu'**au moins deux bras de profilé (15, 16) de la pièce profilée (5, 25), situés en particulier aux extrémités, forment des surfaces de guidage par entourage (17, 18) du guide rectiligne (7).

6. Dispositif selon l'une des revendications 1 à 5, **caractérisé en ce que** la pièce profilée (5, 25) présente une partie profilée en saillie (19) à partir du piquet d'espalier (4) avec au moins une ouverture profilée (20) qui forme au moins une partie de l'élément de maintien (6) pour le fil de tension (2, 3).

7. Dispositif selon la revendication 6, **caractérisé en ce que** la partie profilée (19) a une section en forme de U.

8. Dispositif selon la revendication 6 ou 7, **caractérisé en ce que** l'ouverture profilée (20) présente au moins deux fentes (21, 22) inclinées l'une vers l'autre, en particulier perpendiculaires l'une à l'autre.

9. Dispositif selon la revendication 8, **caractérisé en ce que** l'ouverture profilée (20) est en forme de T.

10. Dispositif selon la revendication 8 ou 9, **caractérisé en ce que** la fente (21) débouchant sur l'arrière (26) de la partie profilée en saillie (19) débouche dans des parties de fente (29) de l'autre fente (22) à différentes hauteurs de la fente, qui sont prévues comme des partie de fente (29) sur chacun des deux bras (27, 28) de la partie profilée en saillie (19).

11. Dispositif selon l'une des revendications 6 à 10, **caractérisé en ce que** l'ouverture profilée (20) débouche sur l'arrière (26) de la partie profilée en saillie (19) en oblique par rapport au guide rectiligne (7).

12. Dispositif selon l'une des revendications 6 à 11, **caractérisé en ce que** la partie profilée en saillie (19) présente au moins deux ouvertures profilées (20) de profondeur différente (23, 24).

13. Dispositif selon l'une des revendications 1 à 12, **caractérisé en ce que** la pièce profilée (5, 25) se compose d'une tôle métallique mise en forme, en particulier profilée par laminage.

14. Dispositif selon l'une des revendications 1 à 13, **caractérisé en ce qu'**au moins une pièce profilée (5, 25) est guidée de façon coulissante sur des faces opposées respectives du piquet d'espalier (4).
